(19) **Europäisches Patentamt / European Patent Office / Office européen des brevets**

(11) **EP 2 846 883 B1**

(12) **FASCICULE DE BREVET EUROPEEN**

(45) Date de publication et mention
de la délivrance du brevet:
**18.01.2017 Bulletin 2017/03**

(21) Numéro de dépôt: **13719819.8**

(22) Date de dépôt: **26.04.2013**

(51) Int Cl.:
*A63B 24/00* (2006.01)     *A63B 49/08* (2015.01)
*A63B 69/38* (2006.01)     *G09B 19/00* (2006.01)
*A63B 71/06* (2006.01)

(86) Numéro de dépôt international:
**PCT/EP2013/058719**

(87) Numéro de publication internationale:
**WO 2013/167395 (14.11.2013 Gazette 2013/46)**

(54) **PROCÉDÉ D'ANALYSE DU JEU D'UN UTILISATEUR D'UNE RAQUETTE**

VERFAHREN ZUR ANALYSE DES SPIELS EINES SCHLÄGERBENUTZERS

METHOD FOR ANALYSING THE GAME OF A RACKET USER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.05.2012 FR 1254257
10.10.2012 FR 1259662**

(43) Date de publication de la demande:
**18.03.2015 Bulletin 2015/12**

(73) Titulaire: **Movea
38000 Grenoble (FR)**

(72) Inventeurs:
• **KERHUEL, Lubin
64100 Bayonne (FR)**
• **SOUBEYRAT, Cyrille
38140 Reaumont (FR)**

• **YOUSSEF, Joe
38000 Grenoble (FR)**
• **FRASSATI, Anne
38340 Voreppe (FR)**
• **DUVAL, Agnès
38400 Saint Martin D'heres (FR)**
• **RICCARDI, Sébastien
38590 Brezins (FR)**

(74) Mandataire: **Brunelli, Gérald
Marks & Clerk France
Immeuble Visium
22, avenue Aristide Briand
94117 Arcueil Cedex (FR)**

(56) Documents cités:
**WO-A1-2009/056688    WO-A2-02/35184
WO-A2-2011/036567    US-A1- 2006 025 229
US-A1- 2007 105 664    US-B1- 7 326 133**

EP 2 846 883 B1

**Description**

L'invention porte sur un procédé d'analyse du jeu d'un utilisateur d'une raquette, dans lequel on détecte un impact, notamment d'un projectile associé, sur la raquette. On entend par projectile, généralement une balle, dans des jeux ou sports tels que le tennis, le tennis de table, le squash, le racket-ball, ou, par exemple, un volant pour le badminton.

Il est connu des systèmes comprenant des raquettes équipées de capteur pour fournir des données liées au joueur.

La demande de brevet américain US 2011/183787 porte sur une raquette équipée d'au moins un capteur, par exemple, un accéléromètre, un anémomètre, un capteur de pression, un capteur de contrainte ou un capteur piézoélectrique.

Ce document est très général et concerne une raquette équipée d'au moins un capteur, et d'un dispositif intégré à la raquette, commandé par un moteur, pour modifier au moins une caractéristique de la raquette, par exemple la rigidité ou la tension du cordage, en fonction du signal du capteur. Un tel dispositif semble de coût et de masse élevés.

Le brevet américain US 5757266 porte sur un système électronique prévu pour surveiller la capacité d'un joueur à bien centrer sa balle sur le tamis de sa raquette sur laquelle une pluralité de capteurs, répartis sur la périphérie du tamis ou cordage de la raquette permettant de détecter des temps d'arrivée relatifs des ondes créées par un impact de balle sur la raquette. A partir de ces signaux, la position de l'impact de la balle sur le tamis peut être calculée. Ce calcul est effectué par un microprocesseur embarqué dans la raquette. En outre un dispositif d'affichage est prévu sur la raquette pour fournir au joueur des informations relatives au centrage de la balle.

Un tel système n'est pas adapté pour déterminer des impacts sur la raquette qui ne sont pas des impacts de balles. En outre, le nombre de capteurs est important et le coût élevé.

La demande de brevet américain US 2005/0239583 porte sur un dispositif de frappe ou percussion, telle une raquette, une batte ou un bâton, muni de capteurs dont un capteur d'accélération, pour déterminer la vitesse de l'objet déplacé ou du dispositif de frappe.

Le système décrit semble relativement limité à évaluer une vitesse d'un élément de frappe ou percussion, ou une vitesse de l'objet déplacé.

Le brevet américain US 6134965 porte sur une raquette équipé de capteurs de vibrations, dont on analyse la fréquence pour déterminer la vitesse de la balle frappée.

Le système décrit semble relativement limité à évaluer une vitesse d'un élément de frappe ou percussion, ou une vitesse de la balle.

Le document WO 02/35184 décrit un procédé d'analyse du jeu d'un utilisateur d'un équipement sportif qui peut être une raquette de tennis. Ce procédé met en oeuvre la détection d'un impact à partir de mesures fournies par un ensemble capteur et l'association d'un instant d'impact à un impact détecté.

Un but de l'invention est de proposer un procédé amélioré d'analyse du jeu d'un utilisateur d'une raquette et d'un projectile associé, permettant en temps réel ou différé de pouvoir analyser le jeu du joueur.

Un autre but de l'invention est d'améliorer la précision de la détection d'un impact du projectile sur la raquette.

Aussi, il est proposé, selon un aspect de l'invention, un procédé d'analyse du jeu d'un utilisateur d'une raquette, dans lequel :

- on détecte un impact sur la raquette à partir de mesures représentatives d'un choc subi par la raquette fournies à partir d'un ensemble capteur comprenant au moins un capteur sensible aux chocs lié fixement en mouvement à la raquette ;
- on associe un instant d'impact à un impact détecté, à partir des mesures transmises par l'ensemble capteur ; et
- on élimine des impacts non liés à des coups d'un ensemble de coups prédéterminés à partir de mesures de vitesses de rotations angulaires, fournies par un gyromètre de l'ensemble capteur à au moins un axe de mesure et lié fixement en mouvement à la raquette, prises durant un intervalle de temps autour dudit instant d'impact.

Le jeu peut être le tennis, le squash, le tennis de table, le badminton, ou tout sport de raquette.

Un tel procédé permet d'améliorer d'analyse du jeu d'un utilisateur d'une raquette et d'un projectile associé, permettant en temps réel ou différé de pouvoir analyser le jeu du joueur.

Un tel procédé permet également d'éliminer des impacts qui ne font pas partie du jeu afin d'analyser uniquement des coups du jeu.

Dans un mode de mise en oeuvre, ledit ensemble capteur comprenant au moins un capteur de vibrations, on détecte un impact sur la raquette à partir de mesures de vibrations transmises par le capteur de vibration, par comparaison d'un paramètre représentatif des vibrations avec un seuil.

Un capteur de vibrations, par exemple un capteur piézoélectrique, permet de détecter facilement et à coup réduit.

Selon un mode de mise en oeuvre, ledit ensemble capteur comprenant un accéléromètre à au moins un axe de mesure, on détecte un impact sur la raquette lorsqu'un paramètre dépendant des variations temporelles des accélérations linéaires axiales et/ou des variations temporelles des vitesses de rotation angulaires est supérieur à un seuil.

L'utilisation de tels capteurs permet d'analyser les mouvements des coups, même s'ils saturent par moments.

Dans un mode de mise en oeuvre, on élimine des impacts non liés à des coups d'un ensemble de coups prédéterminés, à partir d'une comparaison entre une valeur représentative de la vitesse de rotation angulaire selon un axe durant un intervalle de temps autour de l'instant d'impact et un seuil.

Ainsi, on analyse uniquement des coups qui font partie du jeu.

Selon un mode de mise en oeuvre, ledit gyromètre comprenant au moins deux axes de mesure, on élimine des impacts non liés à des coups d'un ensemble de coups prédéterminés, à partir d'une comparaison entre une première valeur représentative de la vitesse de rotation angulaire selon un premier axe durant un intervalle de temps autour de l'instant d'impact et une deuxième valeur représentative de la vitesse de rotation angulaire selon un deuxième axe durant ledit intervalle de temps.

Ainsi, on évite de fausses détections d'impacts, notamment les impacts latéraux, par exemple lorsque le joueur tape le côté sa raquette contre ses chaussures de sport pour enlever la terre battue, ou bien lorsqu'il tape le côté de sa raquette dans sa main.

Dans un mode de mise en oeuvre, ledit gyromètre comprenant trois axes de mesure et ledit ensemble capteur comprenant au moins un accéléromètre à trois axes de mesure, on détermine l'attitude de la raquette par rapport à un repère terrestre à partir des mesures des accélérations linéaires axiales et des mesures des vitesses de rotation angulaire selon lesdits axes de mesure.

Le fait de déterminer, en continu, l'attitude de la raquette par rapport à un repère terrestre permet d'éviter des détections de coups que l'on ne souhaite pas détecter.

Selon un mode de mise en oeuvre, on classifie un coup parmi un ensemble de coups, par association d'un coup à un mouvement de la raquette pour lequel, autour de l'instant d'impact, la vitesse de rotation de la raquette est essentiellement selon un axe déterminé et l'attitude de la raquette est essentiellement selon une attitude déterminée.

On entend par orientation ou attitude les écarts angulaires des axes du repère lié à la raquette par rapport aux axes repère terrestre. Cette donnée d'attitude est classiquement exprimée par une matrice de rotation un quaternion, des angles d'Euler ou tout autre représentation adaptée. Pour des coups déterminés l'attitude de la raquette ne peut être quelconque.

Il est donc aisé de déterminer un coup parmi un ensemble de coups, tel un service, un coup droit ou un revers. Le joueur ou son entraineur peut ainsi évaluer la bonne exécution des différents coups par le joueur, pour améliorer sa technique.

En effet, pour qu'un mouvement soit un coup, il faut bouger la raquette comme il faut et avoir la raquette dans une orientation particulière. Par exemple, au tennis, on peut difficilement faire un service avec la raquette horizontale.

Ainsi, on améliore la détermination du coup et l'évaluation de la bonne exécution d'un coup.

Selon un mode de mise en oeuvre, on classifie un coup parmi un ensemble de coups, en outre à partir d'une information représentative du caractère gaucher ou droitier du joueur, et du signe de la vitesse de rotation angulaire selon l'axe déterminé.

La précision est ainsi améliorée. L'ensemble des coups est plus grand et l'invention permet de discriminer plus de coups, avec une plus grande précision.

Par exemple, l'information représentative du caractère gaucher ou droitier du joueur est fournie par le joueur ou apprise automatiquement durant le jeu, par exemple à l'occasion de phases particulières du jeu.

Si on apprend durant le jeu, le joueur n'a pas besoin de renseigner "manuellement" son caractère est gaucher ou droitier.

Dans un mode de mise en oeuvre, on détecte un coup parmi un ensemble de coups, par association d'un coup à une forme déterminée d'un signal de projection d'un vecteur représentatif de l'attitude de la raquette sur un axe déterminé sur un intervalle de temps autour de l'instant d'impact.

Ainsi, le joueur peut veiller à la bonne exécution des différents coups, obtenir des statistiques sur sa pratique du jeu, et améliorer sa technique.

Selon un mode de mise en oeuvre, ledit gyromètre comprenant au moins deux axes de mesure et l'impact étant du à un projectile, on détermine l'intensité d'un effet donné au projectile, au moment de l'impact à partir d'une comparaison de la vitesse de rotation angulaire selon un premier axe durant un intervalle de temps autour de l'instant d'impact et de la vitesse de rotation angulaire selon un deuxième axe durant ledit intervalle de temps.

Ainsi, le joueur obtient des statistiques sur l'usage qu'il fait des effets, sur leur intensité et peut apprendre et progresser dans l'utilisation d'effets.

Dans un mode de mise en oeuvre, lesdits axes comprennent un premier axe transversal dans la direction de la largeur de la raquette et un deuxième axe transversal dans la direction de l'épaisseur de la raquette, et on différencie un effet coupé d'un effet lifté à partir du signe de la vitesse de rotation angulaire selon le deuxième axe transversal et d'une orientation de la raquette durant ledit intervalle de temps.

Il est alors facile de différencier un effet coupé d'un effet lifté.

Selon un mode de mise en oeuvre, les axes comprennent un axe longitudinal orienté du manche vers la tête de la raquette, ledit gyromètre à au moins un axe de mesure étant apte à délivrer une vitesse de rotation selon l'axe longitudinal, et l'impact étant du à un projectile, on détermine une bande longitudinale d'impact sur le tamis de la raquette, dans laquelle a eu lieu l'impact du projectile, à partir d'une variation de la vitesse de rotation angulaire selon l'axe longitudinal sur un intervalle de temps suivant immédiatement l'impact.

Ainsi, le joueur dispose d'une statistique sur le centrage du projectile sur le tamis de la raquette, il peut améliorer sa position d'impact lorsqu'il frappe le projectile, et ainsi optimiser sa régularité, sa précision, sa perte d'énergie.

Dans un mode de mise en oeuvre, ledit gyromètre à au moins un axe de mesure étant apte à délivrer une vitesse de rotation selon un premier axe transversal dans la direction de la largeur de la raquette, ladite détermination de bande longitudinale d'impact est corrigée par une information représentative de la vitesse de la raquette autour de l'instant d'impact.

La détermination de bande longitudinale d'impact est ainsi améliorée.

Selon un mode de mise en oeuvre, l'ensemble capteur comprenant au moins un capteur de vibrations et l'impact étant du à un projectile, on détermine une bande radiale d'impact, dans laquelle a eu lieu l'impact du projectile, à partir de l'énergie et de la phase du signal transmis par le capteur de vibration du à l'impact.

Ainsi, le joueur dispose d'une statistique sur le centrage du projectile sur le tamis de la raquette, il peut améliorer la position d'impact du projectile, et optimiser sa régularité, sa précision, limiter son énergie perdue.

Ainsi, en connaissant à quelle vitesse on frappe la balle, il est possible de s'entrainer à optimiser le coup, améliorer la vitesse des coups, frapper plus fort, mais sans perdre de précision.

Selon un mode de mise en oeuvre, l'ensemble capteur comprenant un accéléromètre à trois axes de mesure et/ou un gyromètre (G) à trois axes de mesure, et l'impact étant du à un projectile, lors d'un démarrage d'une phase de jeu, on calcule respectivement une vitesse d'envoi du projectile à partir des mesures des accélérations axiales et/ou des mesures des vitesses de rotation angulaire pendant la phase d'accélération de la raquette précédant l'impact.

Ainsi, en connaissant à quelle vitesse on frappe la balle, il est possible de s'entrainer à optimiser le coup, améliorer sa vitesse de balle sur ces phases de démarrage du jeu, frapper plus fort, mais sans perdre de précision.

Dans un mode de mise en oeuvre, on corrige la vitesse d'envoi du projectile calculée à partir de la connaissance d'une zone d'impact du projectile et/ou de l'intensité de l'effet donné au projectile.

Ainsi, la précision du calcul de la vitesse est améliorée.

Selon un mode de mise en oeuvre, on détermine, en outre la localisation du joueur sur l'espace de jeu à partir de données fournies par un système de localisation du joueur ou de la raquette.

Ainsi, il est possible de connaître davantage de statistiques en récupérant la distribution des coups faits par le joueur en fonction de sa position sur le terrain. Ces informations permettent de mettre en évidence des comportements du joueur, de les améliorer.

Dans un mode de mise en oeuvre, l'ensemble capteur comprenant au moins un accéléromètre, et lorsque durant un intervalle de temps autour de l'instant d'impact les signaux du ou desdits capteurs sont saturés, on effectue une extrapolation des signaux fournis par le ou les capteurs sur ledit intervalle de temps de saturation.

Ainsi, même en cas de saturation des capteurs, la précision reste excellente.

Dans un mode de mise en oeuvre, on fournit, en temps réel ou en différé, des statistiques qualitatives et/ou quantitatives relatives à la manière de jouer du joueur.

Il est ainsi possible pour le joueur ou son entraineur de pouvoir suivre son niveau de jeu soit en direct, soit en différé, pour s'améliorer. Le niveau de jeu peut être suivi de manière qualitative et/ou quantitative.

Il est également proposé, selon un autre aspect de l'invention, un système d'analyse du jeu d'un utilisateur d'une raquette, comprenant :

- des moyens de détection d'un impact sur la raquette à partir de mesures représentatives d'un choc subi par la raquette fournies à partir d'un ensemble capteur comprenant au moins un capteur sensible aux chocs lié fixement en mouvement à la raquette ;
- des moyens d'association d'un instant d'impact à un impact détecté, à partir des mesures transmises par l'ensemble capteur ;
- un gyromètre, de l'ensemble capteur, à au moins un axe de mesure et lié fixement en mouvement à la raquette ; et
- des moyens d'élimination des impacts non liés à des coups d'un ensemble de coups prédéterminés à partir de mesures de vitesses de rotations angulaires, fournies par ledit gyromètre, prises durant un intervalle de temps autour dudit instant d'impact.

Par exemple, ledit ensemble capteur est monté fixement dans un boîtier externe muni de moyens de fixation adaptés pour être à volonté montés/démontés sur la raquette, ou est monté fixement sur la raquette.

Selon un mode de réalisation, ledit ensemble capteur est monté fixement sur la raquette de sorte que deux axes de mesures dudit ensemble capteur forment un angle de 45° avec un premier axe transversal dans la direction de la largeur de la raquette et un axe longitudinal dans la direction de la longueur de la raquette.

Dans le cas du boîtier externe muni de moyens de fixation adaptés pour être à volonté montés/démontés sur la raquette, le système comprend une partie autonome, qui peut être adaptée à toute raquette.

Dans le cas du boîtier externe monté fixement sur la raquette, le système comprend des capteurs montés sur la raquette de manière définitive, ce qui permet d'optimiser le fonctionnement aux caractéristiques de la raquette.

Dans un mode de réalisation, l'ensemble capteur est monté fixement sur la raquette et comprend un accéléromètre et un gyromètre disposés dans le manche de la raquette au niveau du bas de la poignée, et un capteur de vibrations disposé sur le manche de la raquette entre la poignée et le bas de la tête de la raquette.

Il s'agit d'un cas de placement des capteurs donnant des résultats améliorés.

L'invention sera mieux comprise à l'étude de quelques modes de réalisation décrits à titre d'exemples nullement limitatifs et illustrés par les dessins annexés sur lesquels :

- la figure 1 illustre schématiquement un procédé d'analyse du jeu d'un utilisateur d'une raquette et d'un projectile associé selon un aspect de l'invention ;
- la figure 2 illustre schématiquement les axes de la raquette correspondant aux mesures, ou auxquels on ramène les mesures des capteurs liés fixement en mouvement à la raquette, selon un aspect de l'invention ;
- la figure 2a illustre schématiquement les axes de mesure ou les axes auxquels on ramène les mesures des capteurs liés fixement en mouvement à la raquette, inclinés de 45° par rapport aux axes de la raquette, selon un aspect de l'invention ;
- la figure 3 illustre schématiquement l'élimination d'impacts non souhaités, selon un aspect de l'invention ;
- la figure 4 illustre la détermination de l'attitude ou orientation de la raquette, selon un aspect de l'invention ;
- la figure 5 illustre schématiquement la détection d'un coup parmi un ensemble de coups, selon un aspect de l'invention ;
- la figure 6 illustre schématiquement l'orientation de l'axe longitudinal de la raquette par rapport au vecteur gravité, par projection de l'axe longitudinal sur le vecteur gravité, selon un aspect de l'invention ;
- la figure 7 illustre schématiquement l'évolution de cette projection au cours d'un service, selon un aspect de l'invention ;
- la figure 8 illustre schématiquement l'orientation du premier axe transversal x dans la direction de la largeur de la raquette par rapport au vecteur gravité, par projection du premier axe transversal sur le vecteur gravité, selon un aspect de l'invention ;
- la figure 9 illustre schématiquement un tableau de résultat de détermination d'un coup droit ou d'un revers, selon un aspect de l'invention ;
- la figure 10 illustre schématiquement trois bandes d'impact longitudinales, une bande d'impact haute, une bande d'impact médiane, et une bande d'impact basse, de la raquette, selon un aspect de l'invention ;
- la figure 11 illustre schématiquement la variation de la vitesse angulaire de rotation selon l'axe longitudinal z orienté du manche vers la tête de la raquette au cours d'un impact du projectile, selon un aspect de l'invention ;
- la figure 12 illustre schématiquement trois bandes d'impact radiales de la raquette, selon un aspect de l'invention ;
- la figure 13 illustre schématiquement la phase $\Phi_1$ du signal délivré par le capteur piézoélectrique en fonction de l'énergie normalisée $E_{E1}$, dans le cas de la figure 12, selon un aspect de l'invention;
- la figure 14 illustre schématiquement l'évolution temporelle de la raquette durant un service, selon un aspect de l'invention;
- la figure 15 illustre schématiquement l'évolution temporelle de l'accélération de la raquette lors d'un service selon un aspect de l'invention; et
- la figure 16 illustre le calcul de la vitesse du projectile selon un aspect de l'invention.

Dans l'ensemble de figures, les éléments ayants les mêmes références sont similaires. Les exemples décrits se rapportent au tennis, sans toutefois être limitatifs, car l'invention s'applique à tout type de jeu ou sport nécessitant l'utilisation d'une raquette et d'un projectile associé.

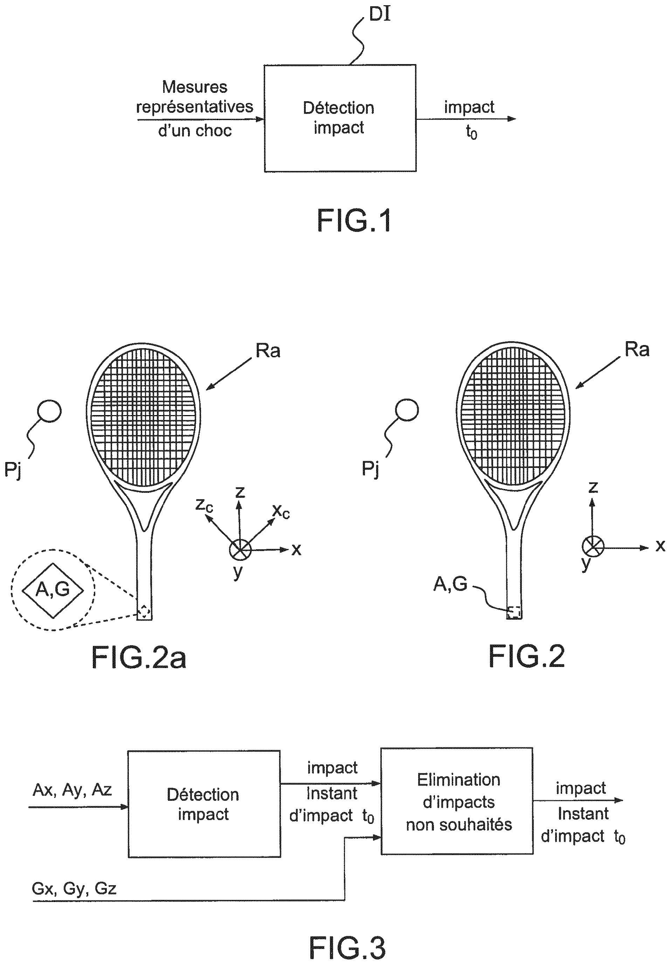

Sur la figure 1 est illustré un procédé d'analyse du jeu d'un utilisateur d'une raquette et d'un projectile associé, dans lequel on détecte un impact du projectile sur la raquette, auquel on associe un instant d'impact $t_0$ à partir de mesures représentatives d'un choc subi par la raquette, par exemple par un ensemble capteur comprenant un gyromètre à au moins un axe de mesure. L'ensemble capteur peut en outre comprendre au moins un capteur de vibrations, et/ou au moins un accéléromètre à au moins un axe de mesure. Une fois que l'instant d'impact $t_0$ est connu, on analyse les données fournies par les capteurs autour de l'instant d'impact $t_0$ pour déterminer s'il s'agit d'un coup parmi l'ensemble de coups, et pour déterminer d'autres paramètres du jeu, comme l' effet, la vitesse ...

Comme illustré sur l'exemple de la figure 2, sur lequel l'ensemble capteur comprend un accéléromètre à au moins un axe de mesure et un gyromètre à au moins un axe de mesure, les axes de mesures étant, par exemple, orthogonaux directs de l'accéléromètre A et du gyromètre G correspondent respectivement à un premier axe transversal

x dans la direction de la largeur de la raquette Ra, un deuxième axe transversal y dans la direction de l'épaisseur de la raquette Ra, et un axe longitudinal z orienté du manche vers la tête de la raquette Ra. Dans le cas du tennis, le projectile Pj associé est une balle de tennis.

En variante, comme illustré sur la figure 2a, les axes de l'ensemble capteur peuvent être différents des axes de la raquette (transversal dans la direction de la largeur de la raquette Ra, transversal dans la direction de l'épaisseur de la raquette Ra, et orienté du manche vers la tête de la raquette Ra). En l'espèce, comme illustré sur la figure 2a, l'ensemble capteur peut comprendre un premier axe $x_c$ décalé de 45° par rapport à un axe transversal x dans la direction de la largeur de la raquette Ra et un deuxième axe $z_c$ décalé de 45° par rapport à un axe transversal z dans la direction de la longueur de la raquette.

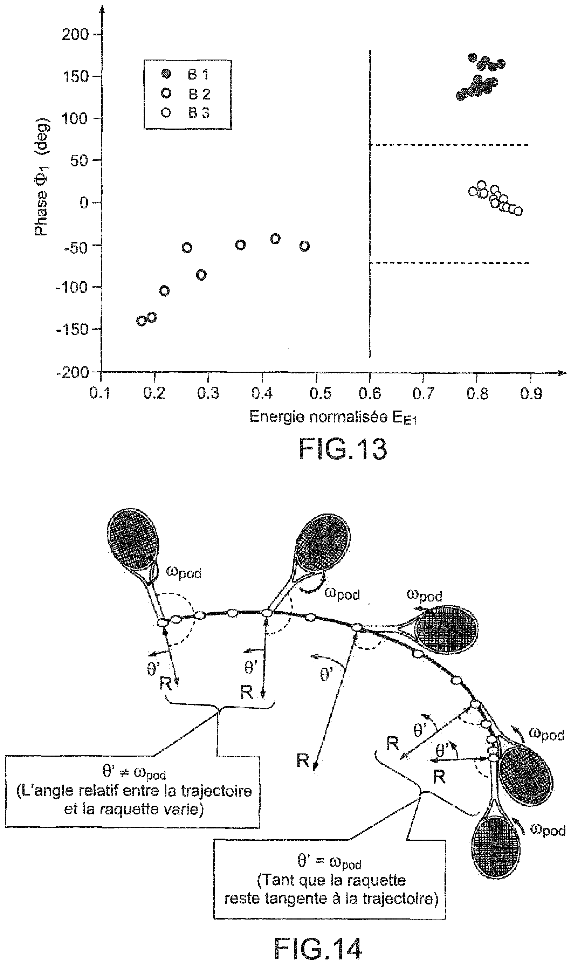

Dans ce mode de réalisation, les risques de saturation des capteurs sont diminués. En effet, au début d'un service, il y a une forte accélération selon l'axe z car la raquette Ra est tangente à la trajectoire de la raquette Ra, comme illustré sur la partie droite de la figure 14. Dans ce mode de réalisation, l'accélération Az selon l'axe z de la raquette est mesurée par les capteurs sur les axes $x_c$ et $z_c$. Chaque capteur mesure une accélération $Az/\sqrt{2}$. En conséquence, il est possible de mesurer une plus grande accélération Az selon l'axe z (d'un facteur $\sqrt{2}$) avant que les accéléromètres commencent à saturer.

Par analogie, on peut déduire qu'il existe un avantage similaire lors du calcul de la vitesse de rotation le long du premier axe x transversal de la raquette avec le gyromètre G. Au cours des coups typiques d'une raquette, la vitesse de rotation est la plus élevée sur le premier axe transversal de la raquette.

Dans le mode de réalisation de la figure 2a, l'axe y des capteurs est identique au deuxième axe transversal y de la raquette Ra. Si, en outre, on tourne l'axe y des capteurs à 45 degrés par rapport au deuxième axe transversal y de la raquette Ra, par analogie, on gagne un facteur $\sqrt{3}$ au lieu d'un facteur $\sqrt{2}$ parce que les mesures sont faites sur trois axes au lieu de deux axes.

Lorsqu'on détecte un impact, on associe un instant d'impact $t_0$, à partir de variations temporelles des accélérations linéaires axiales Ax, Ay et Az délivrées par l'accéléromètre A respectivement selon les axes x, y et z.

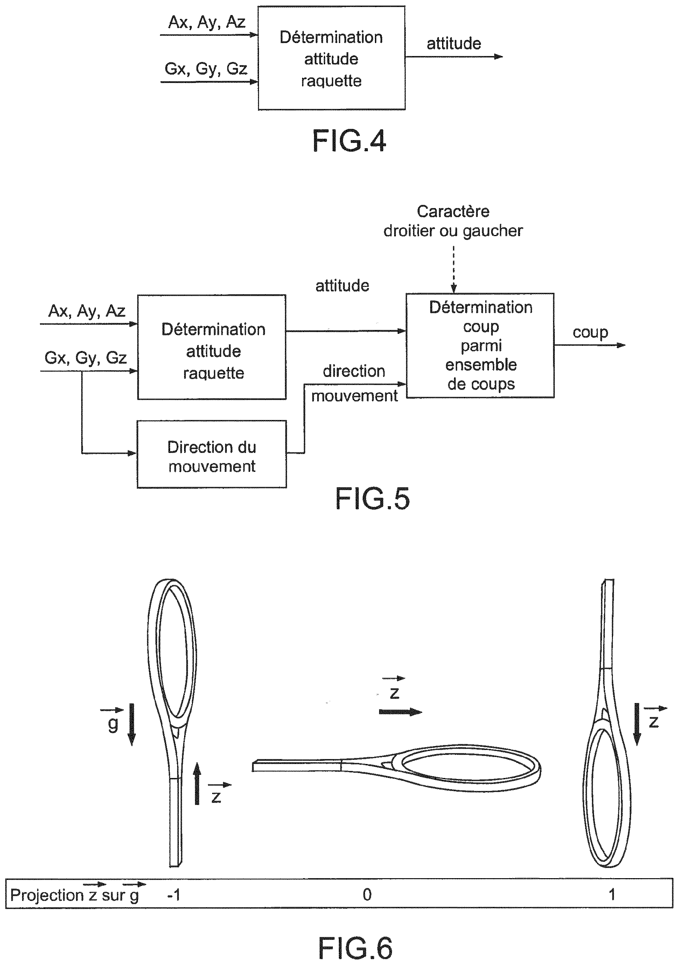

En outre, on élimine des impacts non liés à des coups d'un ensemble de coups prédéterminés à partir des vitesses de rotation angulaire Gx, Gy et Gz selon les axes x, y et z. Ainsi, comme illustré sur la figure 3, si l'impact provient d'un coup ne faisant pas partie de l'ensemble de coup, on ne continue pas l'analyse. En variante, il peut être intégré, en combinaison, un module de détermination d'attitude de la raquette Ra, tel qu'illustré sur la figure 4.

L'ensemble de coups prédéterminés peut, par exemple, comprendre les coups suivants: service, coup droit, et revers.

Un impact non lié à un coup de cet ensemble, peut correspondre, à un impact de la raquette Ra sur une chaussure de sport pour décoller de la terre battue, ou correspondre à des rebond de la balle sur le tamis de la raquette Ra effectués par un joueur qui va servir, entre deux périodes de jeu. Par exemple, pour de tels coups, le tamis de la raquette est horizontal, et il ne peut donc pas s'agir d'un service, coup droit, ou revers.

Par exemple, on peut détecter un impact du projectile Pj sur la raquette Ra lorsqu'une norme d'un vecteur *DVA* = (*DVAx; DVAy; DVAz*) de variation d'accélération dont les composantes sont les dérivées temporelles $\left(\dfrac{dAx}{dt};\dfrac{dAy}{dt};\dfrac{dAz}{dt}\right)$ des accélérations linéaires axiales (*Ax; Ay; Az*) est supérieure à un seuil S1. En variante, il est possible de détecter un impact du projectile Pj sur la raquette Ra lorsqu'une norme d'un vecteur *DVA* = (*αDVAx; βDVAy; γDVAz*) de variation d'accélération dont les composantes sont basées sur les dérivées temporelles $\left(\alpha\dfrac{dAx}{dt};\beta\dfrac{dAy}{dt};\gamma\dfrac{dAz}{dt}\right)$ des accélérations linéaires axiales (*Ax; Ay; Az*), (*α, β et γ étant quelconques*) est supérieure à un seuil S1.

La norme peut, par exemple, être la norme euclidienne ou norme2 $\left(\|DVA\|_2 = \sqrt{|DVAx|^2 + |DVAy|^2 + |DVAz|^2}\right)$, la norme 1 ($\|DVA\|_1 = |DVAx| + |DVAy| + |DVAz|$), la norme p ($\|DVA\|_p = (|DVAx|^p + |DVAy|^p + |DVAz|^p)^{\frac{1}{p}}$), ou la norme infinie ($\|DVA\|_\infty = max(|DVAx|; |DVAy|; |DVAz|)$),

En effet, pour la détection d'impact, même en cas de saturation de l'accéléromètre A, une importante variation peut être détectée par comparaison avec un seuil, en l'occurrence le seuil S1.

Par exemple, on détecte un impact en testant si la norme 1 de DVA est supérieure au seuil S1, par exemple égal à 11 :

$$\left|\frac{dAx(t)}{dt}\right| + \left|\frac{dAy(t)}{dt}\right| + \left|\frac{dAz(t)}{dt}\right| > S1$$

La valeur du seuil S1 est classiquement obtenue par apprentissage sur une base de test.

En outre, il est possible de tenir compte, pour la détection d'un impact, d'une première comparaison entre une première valeur représentative de la vitesse de rotation angulaire $G_x$ selon le premier axe transversal x durant un premier intervalle de temps $\Delta t1$ précédant immédiatement l'impact et un seuil S2. On évite de fausses détections d'impacts, correspondant par exemple, à une rotation de la raquette selon l'axe y, pouvant correspondre à une frappe de la raquette contre une chaussure ou le filet. On tient compte en l'occurrence que l'axe principal du mouvement est le premier axe transversal x.

Cette première comparaison peut, par exemple, s'écrire sous la forme suivante :

$$\int_{t_1}^{t_0}|G_x(t)|dt > S2,$$

dans laquelle $\int_{t_1}^{t_0}|G_x(t)|dt$ représente la première valeur et le seuil S2 peut, par exemple valoir 30, $t_0$ étant le temps d'impact et $t_1$ précédant l'impact, par exemple $t_1=t_0-50ms$. Il est également possible de choisir un autre intervalle de temps de façon à sélectionner les portions de signal propres et représentatives du mouvement de la raquette autour de l'impact, sans subir les effets de choc qui distordent généralement les signaux des capteurs.

La valeur du seuil S2 est classiquement obtenue par apprentissage sur une base de test. S2 est faible de manière à ne pas rater les coups manquant de puissance.

Il est également possible de tenir compte, séparément ou en combinaison avec ce qui précède, pour la détection d'un impact, d'une deuxième comparaison entre une première valeur représentative de la vitesse de rotation angulaire $G_x$ selon le premier axe transversal x durant le premier intervalle de temps $\Delta t1$ précédant immédiatement l'impact et une deuxième valeur représentative de la vitesse de rotation angulaire $G_y$ selon le deuxième axe transversal y durant le premier intervalle de temps $\Delta t1$. On évite de fausses détections d'impacts, notamment les impacts latéraux, par exemple lorsque le joueur tape le côté sa raquette Ra contre ses chaussures de sport pour enlever la terre battue, ou bien lorsqu'il tape le côté de sa raquette Ra dans sa main. Ainsi on tient compte du fait que le mouvement selon le premier axe transversal x est plus important que selon les deux autres axes y et z.

Cette deuxième comparaison peut, par exemple, s'écrire sous la forme suivante :

$$\int_{t_1}^{t_0}|G_x(t)|dt > C1 \times \int_{t_1}^{t_0}|G_y(t)|dt$$

dans laquelle :

$\int_{t_1}^{t_0}|G_x(t)|dt$ représente la première valeur,

$C1 \times \int_{t_1}^{t_0}|G_y(t)|dt$ représente la deuxième valeur, et

C1 est un critère pouvant par exemple valoir ½.

En outre, on peut déterminer l'attitude ou l'orientation de la raquette Ra par rapport à un repère terrestre à partir des accélérations linéaires axiales Ax, Ay et Az et des vitesses de rotation angulaire Gx, Gy et Gz selon les axes x, y et z, comme illustré sur la figure 4.

Plusieurs dispositifs physiques et types d'algorithmes peuvent être utilisés pour estimer l'attitude, la vitesse angulaire de l'attitude d'un objet équipé de capteurs de type accéléromètres et gyromètres.

S'agissant des modules de calcul de l'orientation à partir de ces types de capteurs, on pourra se référer aux produits de la société Movea (marque déposée) ou des produits de la société XSens (marque déposée), ou Intersense (marque déposée) avec par exemple la famille des produits InertiaCube (marque déposée), ou des produits de la société CrossBow (marque déposée).

On peut se référer par exemple à l'article "An extended Kalman filter for quaternion-based orientation estimation using MARG sensors" de Marins, J.L., Xiaoping Yun, Bachmann, E.R., McGhee, R.B., et Zyda, M.J., publié dans "Intelligent Robots and Systems", 2001, 2001 IEEE/RSJ. Cet article donne accès à de nombreuses autres références qu'il est pertinent d'analyser.

S'agissant des gyromètres, il est par exemple possible d'utiliser les gyromètres fournis par Analog Devices (marque déposée) de référence ADXRS300 (marque déposée), ou l'ITG3200 (marque déposée) de Invensense (marque déposée) ou les gyromètres fournis par STM (marque déposée).

S'agissant des accéléromètres, on peut utiliser par exemple des accéléromètres de référence ADXL103 d'Analog Devices (marque déposée), LIS302DL de STM (marque déposée). FreeScale (marque déposée), Kionix (marque déposée) fournissent également de tels capteurs.

Différents algorithmes peuvent être utilisés pour corriger les perturbations et/ou défaut de chaque capteur et ainsi fusionner les signaux des différents capteurs et donc estimer l'attitude. On peut par exemple se référer à ceux divulgués par la demande internationale WO2010/007160. On peut également utiliser des méthodes alternatives. Les algorithmes les plus connus sont le filtre de Kalman, des méthodes d'optimisation, ou des méthodes de filtrage complémentaire.

Qualitativement, pour fournir la donnée d'orientation, on peut utiliser des dispositifs inertiels embarqués sur l'objet comprenant des combinaisons d'accéléromètres et de gyromètres. Les accéléromètres permettent de mesurer l'orientation de l'objet par rapport à un vecteur fixe lié à la Terre, c'est à dire, la gravité terrestre. Les gyromètres mesurent la vitesse angulaire propre des mouvements de l'objet. Les gyromètres sont généralement affectés d'une dérive temporelle significative qui doit être régulièrement corrigée. L'accéléromètre permet de fournir une orientation absolue par rapport à un repère terrestre. Les gyromètres sont efficaces pour estimer les orientations durant les phases de mouvement rapides, entre deux orientations absolues.

Les capteurs peuvent être des systèmes microélectromécaniques ou MEMS pour "Micro Electro Mechanical Systems" en langue anglaise, éventuellement intégrés, ou réalisés dans d'autres technologies non intégrées. Chaque type de capteur peut comporter un, deux ou trois axes. Aujourd'hui, il est naturel d'intégrer des capteurs à trois axes dans les produits, cette technologie étant maintenant banalisée. Dans certaines applications, un seul type de capteur (dans ce cas généralement à trois axes) peut être utilisé, si les perturbations ou la dérive temporelle peuvent être considérées comme négligeables pour que la donnée finale d'orientation, nécessaire à l'invention soit suffisamment précise, ou être corrigées sans recours à un autre type de capteur. De manière privilégiée, on utilisera cependant une combinaison d'au moins deux types de capteurs, par exemple accéléromètre et gyromètre, pour l'invention.

Il faut noter que ces deux types de capteurs amènent des informations complémentaires en vue d'une estimation de l'orientation. Le gyromètre en version triaxial fournit des mesures de vitesse angulaire selon trois Degrés de Liberté ou DDL, et permet d'estimer l'attitude par intégration de la vitesse angulaire. Il permet donc de calculer une orientation en relatif par rapport à une orientation donnée. Ce principe d'estimation de l'orientation est sujet à une dérive à cause de l'opération d'intégration et du biais du gyromètre, si le gyromètre est utilisé seul. L'accéléromètre en version triaxiale fournit deux informations angulaires (les angles de roulis et de tangage) absolues par rapport à un repère terrestre, mais est sujet à perturbations lorsque les mouvements sont non quasi-statiques puisqu'il mesure en même temps les paramètres d'accélération dus au mouvement. La combinaison des deux capteurs permet de fournir les mesures d'attitude absolue par rapport à un repère terrestre, à l'exception du cap (angle par rapport au Nord dans le référentiel terrestre) par rapport à la Terre dont la valeur ne peut être estimée qu'à partir du gyromètre et donc en valeur relative par rapport à une orientation de référence.

Connaissant l'attitude de la raquette Ra, on détecte un coup parmi un ensemble de coups, par association d'un coup à un mouvement pour lequel, au moment de l'impact, la vitesse de la raquette Ra est essentiellement selon un axe déterminé, comme illustré sur la figure 5. Par exemple, pour un service, en utilisant la projection de l'axe z sur la gravité g, et on suit comment le joueur lève sa raquette.

En outre, il faut utiliser également pour la détection d'un coup parmi un ensemble de coups, une information représentative du caractère gaucher ou droitier du joueur, et de la direction du mouvement déterminée à partir du signe de la vitesse de rotation angulaire selon l'axe déterminé. L'information représentative du caractère gaucher ou droitier du joueur peut être fournie par le joueur ou apprise durant le jeu. Durant un service, le joueur tourne la raquette autour d'axe z, et la direction du mouvement donne l'info sur le caractère gaucher ou droitier du joueur (Rotation Gz>0 : droitier, et Gz<0 : gaucher).

En outre, il est possible d'utiliser également pour la détection d'un coup parmi un ensemble de coups, par association d'un coup à une forme déterminée de la projection de l'attitude de la raquette Ra sur un axe déterminé sur un intervalle de temps comprenant au moins une partie précédant immédiatement l'impact.

Pour illustrer ce qui précède, on prend comme ensemble de coups l'ensemble suivant : {service; coup droit; revers}. Les axes intéressant sont l'axe z pour un service et l'axe x pour un coup droit ou un revers, comme illustré dans l'exemple qui suit.

Pour déterminer si un coup est un service, on utilise, comme illustré sur la figure 6 un suivi de l'orientation de l'axe longitudinal z de la raquette Ra par rapport au vecteur gravité $\vec{g}$. On détermine l'attitude de la raquette Ra à partir des mesures de l'accéléromètre A et du gyromètre G, puis on calcule la projection de l'axe longitudinal z de la raquette Ra sur le vecteur gravité $\vec{g}$. Comme illustré sur la figure 6, on voit selon la position de la raquette Ra, la valeur de la projection de $\vec{z}$ sur $\vec{g}$.

Ainsi, quand la raquette Ra est verticale orientée vers le haut, cette projection vaut -1, quand la raquette Ra est horizontale, cette projection vaut 0, et lorsque la raquette Ra est verticale orientée vers le bas, cette projection vaut 1.

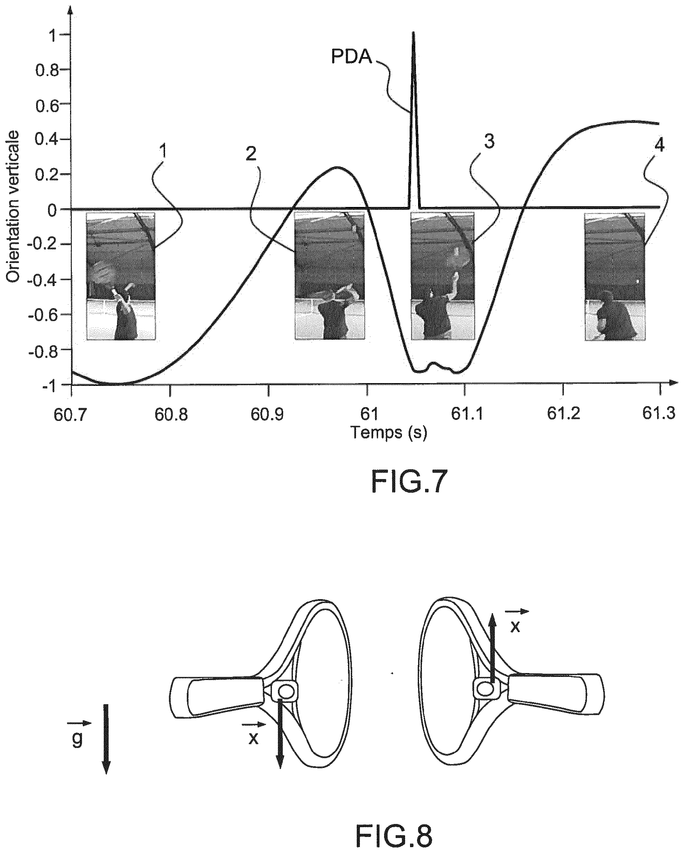

La figure 7 illustre un exemple d'évolution de cette projection au cours d'un service, durant lequel, au moment de l'impact de la balle (pic PDA de détection impact), la raquette Ra est sensiblement verticale orientée vers le haut, et la projection de $\vec{z}$ sur $\vec{g}$ vaut sensiblement -1.

Différents joueurs peuvent avoir un service différent. Pour couvrir tous les types de service, on utilise différents critères, par exemple, on utilise trois critères pour déterminer un service :

- le premier critère C1 : la projection de la projection de $\vec{z}$ sur $\vec{g}$ au moment de l'impact doit correspondre à une position sensiblement verticale orientée vers le haut, i.e. C1<-0.82. La majorité des services sont détectés par ce critère.
- un deuxième critère C2 : l'amplitude du mouvement, représentée par la différence entre la projection la projection de $\vec{z}$ sur $\vec{g}$ au maximum local P2 avant l'impact et la projection au minimum local P3 au moment de l'impact), i.e. C2>1.71. Avant de tester le critère C2, on s'assure qu'au moment de l'impact la projection de $\vec{z}$ sur $\vec{g}$ est inférieure à -0.5. Ce critère permet de détecter un service pour lequel la balle est frappée avant ou après la position verticale orientée vers le haut de la raquette Ra.
- C3 : la projection au maximum local P2 C3>0.84. Avant de tester le deuxième critère C2, on veut être sur qu'au moment de l'impact la projection est inférieure à -0.5. Ce critère couvre un service lors duquel le joueur projette la raquette Ra assez loin dans le dos, mais frappe la balle avec la raquette Ra pas totalement verticale.

De manière générale, les seuils nécessaires au fonctionnement de la méthode peuvent être avantageusement déterminés sur une base de test représentative des scénarios d'utilisation.

Ces critères sont testés dans l'ordre C1, C2, C3, et si l'un d'eux est réalisé, un service est détecté. Si aucun des trois critères n'est réalisé, il n'est pas détecté de service. On note que les deuxième critère C2 et troisième critère C3 comprennent des contraintes de temps.

Ensuite ou en parallèle, on peut détecter si le coup effectué par le joueur est un coup droit ou un revers.

Le mouvement de service peut également être utilisé pour déterminer si le joueur est droitier ou gaucher. Au cours du mouvement de balancement (traduire le mouvement de "swing") lors du service le joueur tourne la raquette Ra le long de l'axe z. Cette rotation peut être mesurée par le gyroscope z, et à partir de son signe, il est possible de déduire si le joueur est droitier ou gaucher (Rotation Gz>0 : droitier, et Gz<0 : gaucher).

Pour distinguer un coup droit d'un revers, il faut tenir compte de trois facteurs.

- tout d'abord la main dominante : il faut déterminer si le joueur est droitier ou gaucher. Il faut distinguer entre un coup droit d'un joueur droitier et un revers d'un joueur gaucher, ainsi qu'entre un revers d'un joueur droitier et un coup droit d'un joueur gaucher. La main dominante peut être déduite du balancement de service, ou peut être connue à partir d'une entrée de l'utilisateur ;

- ensuite l'orientation de la raquette Ra : pour déterminer l'orientation de la raquette Ra, on calcule l'orientation de l'axe $\vec{x}$ de la raquette Ra par rapport au vecteur de gravité $\vec{g}$. Le signe de la projection de $\vec{x}$ sur $\vec{g}$ nous donne l'orientation de la raquette Ra comme illustré sur la figure 8, l'axe x est vertical orienté vers le bas lorsque la projection de $\vec{x}$ sur $\vec{g}$ vaut 1 et l'axe x est vertical orienté vers le haut lorsque la projection de $\vec{x}$ sur $\vec{g}$ vaut -1 ;

- enfin la direction du mouvement avant l'impact : la direction du mouvement est déterminée à partir du signe de la vitesse de rotation angulaire fournie par le gyromètre G relativement à l'axe $\vec{x}$.

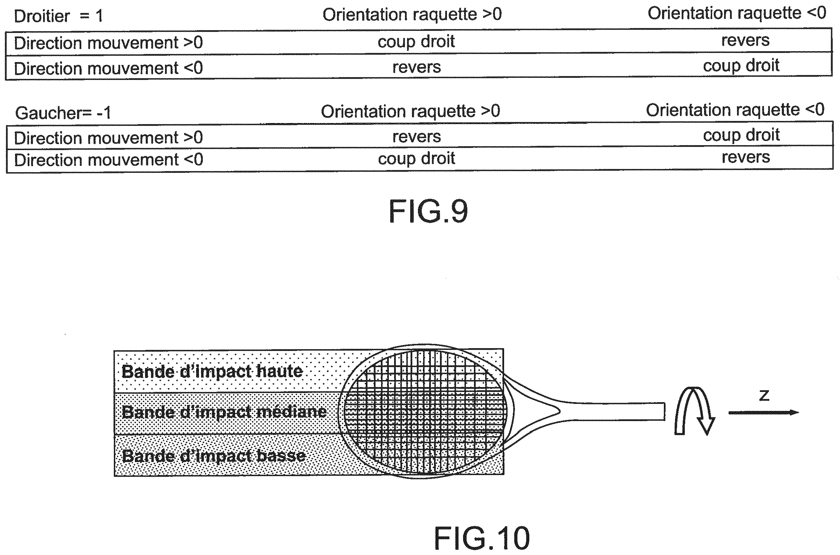

Si on associe à un joueur droitier la valeur 1 et à un joueur gaucher la valeur -1, on peut déterminer le type de coup en multipliant ces trois facteurs. Si le résultat est positif (i.e. vaut 1) le coup est un coup droit, et si le résultat est négatif (i.e. vaut -1) le coup est un revers. Les différents cas sont représentés sur la figure 9.

Il est également possible, en variante ou en combinaison, de déterminer la présence d'un effet donné au projectile Pj au moment de l'impact à partir d'une troisième comparaison de la vitesse de rotation angulaire selon un axe avec la vitesse de rotation angulaire selon un autre axe, par exemple de la vitesse de rotation angulaire $G_x$ selon le premier axe transversal x durant un premier intervalle de temps précédant immédiatement l'impact et de la vitesse de rotation angulaire $G_y$ selon le deuxième axe transversal y durant ledit premier intervalle de temps.

On différencie un effet coupé d'un effet lifté à partir du signe de la vitesse de rotation angulaire $G_y$ selon le deuxième axe transversal y et de la l'orientation ou attitude de la raquette Ra durant ledit premier intervalle de temps.

Par exemple, le joueur peut donner un effet coupé ou lifté à la balle en ajustant la vitesse angulaire Gy de la raquette Ra lors de l'impact. Un coup sans effet a une vitesse de rotation angulaire uniquement dans la direction x, représenté par un signal gyrométrique selon Gx. Un effet est donné en appliquant une rotation autour de l'axe y, augmentant ainsi le signal gyroscopique selon Gy. On considère un coup avec effet lorsque $|Gy| / (|Gx| + |Gy| > S3$, S3 étant un seuil par exemple égal à 0.4.

On peut aussi utiliser la valeur de |*Gy*| / (|*Gx*| + |*Gy*|) pour avoir un paramètre correspondant a l'intensité de l'effet.

Le type d'effet, coupé ou lifté, dépend du signe de Gy et de l'orientation de l'axe X de la raquette par rapport au vecteur gravité :

$$(\text{signe } (Gy)) * (\text{projection de } \vec{x} \text{ sur } \vec{g}) > 0 \text{ effet coupé}$$

$$(\text{signe } (Gy)) * (\text{projection de } \vec{x} \text{ sur } \vec{g}) < 0 \text{ effet lifté}$$

En variante ou en combinaison, comme illustré sur la figure 10 on peut déterminer une bande longitudinale d'impact, dans laquelle a eu lieu l'impact du projectile Pj, à partir d'une variation de la vitesse de rotation angulaire $G_z$ selon l'axe longitudinal z sur un intervalle de temps suivant immédiatement l'impact, corrigée par une information représentative de la vitesse de la raquette Ra juste avant l'impact.

Sur l'exemple de la figure 10, on définit plusieurs bandes d'impact longitudinales, en l'occurrence trois bandes d'impact longitudinales, une bande d'impact haute, une bande d'impact médiane, et une bande d'impact basse.

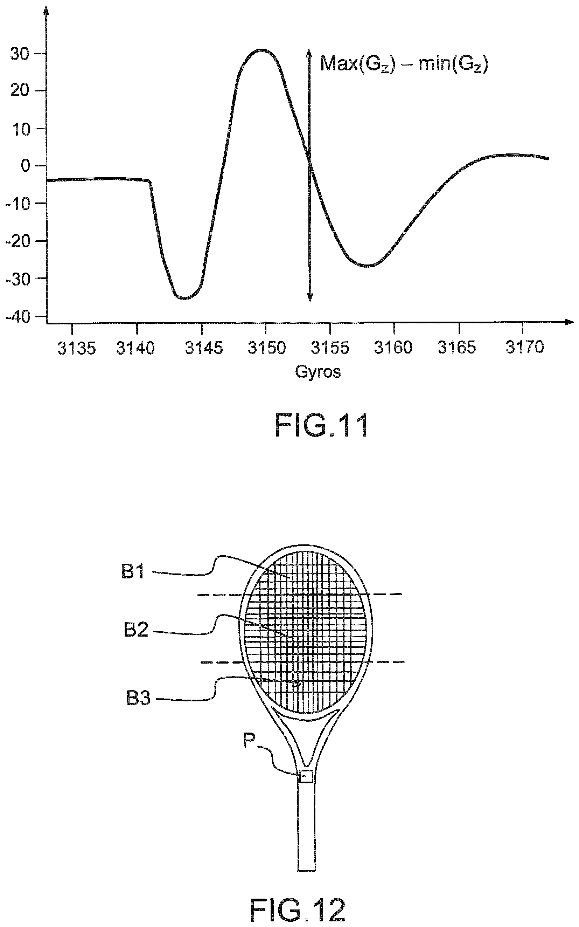

Lors d'un impact hors de l'axe z, le gyromètre Gz qui mesure la vitesse de rotation angulaire Gz autour de l'axe z affiche une oscillation, comme représenté sur la figure 11. La pente descendante représente la rotation de la raquette Ra en raison de l'impact, et la pente remontante est du à la surcompensation par l'action du poignet du joueur.

L'amplitude de l'oscillation max(Gz)-min(Gz) est prise comme une mesure de l'effet de rotation dû à un impact hors axes. Le problème avec cette mesure est qu'une grande vitesse d'impact légèrement hors axes, et un impact à faible vitesse près du bord de la raquette Ra a le même effet. Cela signifie qu'il faut compenser la vitesse, c'est-à-dire la puissance du coup $E_{GXY}$ juste avant impact. Cette énergie peut être représentée par la relation suivante :

$$E_{GXY} = |G_X| + |G_Y|$$

dans laquelle

Gx et Gy représentent les vitesses de rotation angulaire de rotation autour des axes x et y. Une normalisation à l'aide de $\sqrt{E_{GXY}}$ fonctionne bien. Pour déterminer si un impact est dans la bande médiane ou plus hors de l'axe, on introduit C défini par la relation suivante :

$$C = \frac{\max(G_Z) - \min(G_Z)}{\sqrt{\text{E}_{GXY}}(t_0 - 0.1s)}$$

Un seuil C par exemple égal à 2 peut être utilisé pour faire la différence entre les impacts dans la bande médiane (C < 2), et les impacts hors axes (C > 2). Le seuil peut être maintenu fixe, ou peut être légèrement modifiée (entre 1,7 et 2,1) selon le type de coup (service, revers, coup droit, ...) afin d'augmenter la précision. Le meilleur seuil est déterminé par apprentissage sur une base de test.

En regardant le signe de la dérivée dGz/dt au début de l'oscillation, nous pouvons déterminer de quel côté du centre de l'impact a eu lieu.

En variante ou en combinaison, on peut détecter un impact du projectile Pj sur la raquette Ra en outre à partir de mesures de vibrations transmises par un capteur piézoélectrique monté fixement sur la raquette Ra, par comparaison d'un paramètre représentatif des vibrations avec un seuil. Il est par exemple possible d'intégrer le signal dans une fenêtre fréquentielle et de comparer le résultat à ce seuil.

Par exemple, comme illustré sur la figure 12, on détermine parmi plusieurs bandes radiales d'impact, en l'occurrence trois bandes radiales d'impact, B1, B2, et B3, celle dans laquelle a eu lieu l'impact du projectile Pj, à partir de l'énergie et de la phase du signal transmis par le capteur piézoélectrique P juste après l'impact.

Lorsqu'une balle frappe la raquette Ra, elle crée des vibrations, et ces vibrations dépendent de la position de l'impact. En positionnant un capteur piézoélectrique P entre la poignée et le bas du tamis de la raquette Ra, on peut mesurer les vibrations de manière à déduire la position de l'impact.

Pour calculer la position de l'impact, il faut analyser le pic fondamental de vibration dans le spectre de fréquences (autour d'une fréquence pouvant dépendre de la raquette Ra, dans le présent exemple, $f_n$ = 160Hz) et de déterminer l'énergie $E_{E1}$ et la phase du signal.

On a les relations suivantes :

$$E_{E1} = \int s_{mn}^2(t) \ dt \ ,$$

et

$$\Phi_1 = \text{atan}\left(\frac{Im\left(s_{mn}(f_n)\right)}{Re\left(s_{mn}(f_n)\right)}\right) = \text{atan}\left(\frac{\int s_{mn} \sin 2\pi f_n t \ dt}{\int s_{mn} \cos 2\pi f_n t \ dt}\right)$$

dans lesquelles :

Im représente la fonction "partie imaginaire",
Re représente la fonction "partie réelle", et
$S_{mn}(t)$ est une sélection temps-fréquence du signal s(t) fourni par le capteur piézoélectrique P, par exemple s(t) pour les premières 35ms après l'impact et pour des fréquences entre 50Hz et 300Hz autour du pic central ($f_n$=160Hz).

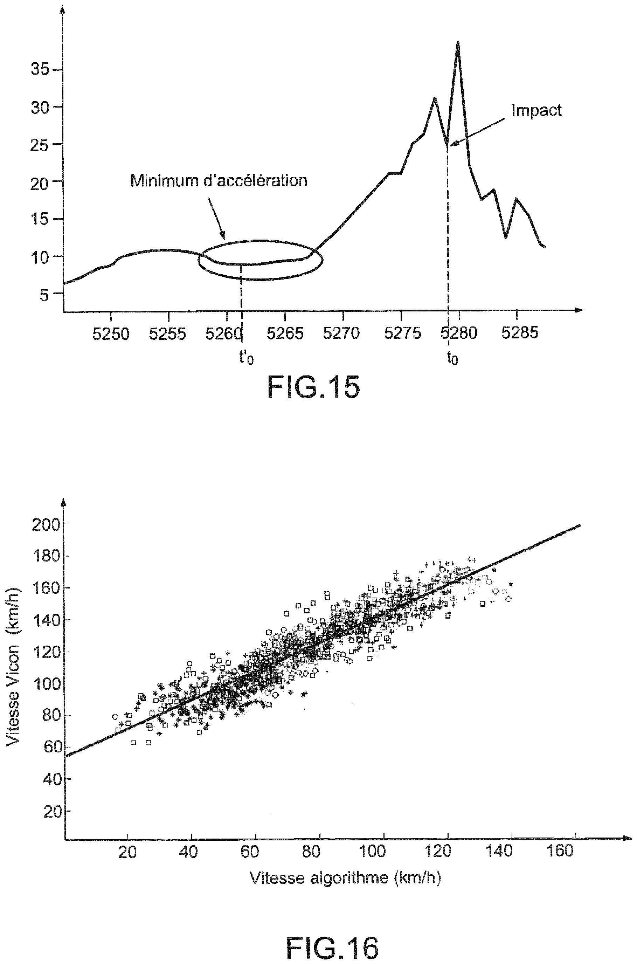

On peut représenter, dans le cas d'une séparation du tamis en bandes radiales, le signal s(t) délivré par le capteur piézoélectrique P, permet de déterminer dans quelle bande radiale s'est produit l'impact.
La figure 13, qui représente la phase du signal s(t) en fonction de l'énergie normalisée $E_{E1}$, montre bien qu'il est possible d'en déduire une bande radiale à laquelle appartient la position d'impact, en l'espèce B1, B2 ou B3.
Il convient de noter que ces caractéristiques dépendent du type de raquette Ra, ce qui signifie que la procédure doit être affinée pour chaque raquette Ra. Pour certaines raquettes il peut être intéressant d'utiliser deux bandes fréquentielles différentes et d'utiliser le rapport des énergies normalisées respectives de ces deux bandes fréquentielles pour l'axe x.
En combinant les déterminations de zone d'impact longitudinale et radiale, on détermine une zone d'impact le long des axes x et z de la raquette Ra, de manière précise.
En outre, indépendamment ou en combinaison, il est possible, lors d'un démarrage d'une phase de jeu, par exemple lors d'un service, de calculer une vitesse d'envoi du projectile Pj à partir des valeurs des accélérations axiales pendant la phase d'accélération de la raquette Ra précédant l'impact et dans la direction du coup de démarrage de la phase de jeu.
Par exemple, on peut corriger la vitesse calculée à partir de la connaissance d'une zone d'impact du projectile Pj et/ou de la présence d'un effet.
On peut calculer la vitesse de la balle lors d'un service car il est possible de supposer que la balle n'a pas de vitesse initiale ou en d'autres termes a une vitesse initiale nulle : V (t0) = 0.
Si on suppose qu'au début du balancement ou au cours du mouvement de balancement du service, la raquette Ra a une vitesse nulle, on peut calculer la vitesse de la raquette Ra juste avant l'impact en utilisant les mesures de l'accéléromètre et/ou du gyromètre de la raquette Ra. En outre, on suppose que la vitesse de la balle après l'impact est égale à la vitesse de raquette Ra juste avant l'impact. En effet, on suppose qu'au moment de l'impact, la raquette Ra et le projectile Pj forment un unique système, et qu'ainsi le projectile Pj prend la vitesse de la raquette Ra.
Dans la pratique, il est fréquent de ne pas pouvoir mesurer l'accélération et la vitesse de rotation angulaire juste avant l'impact, car les capteurs peuvent être saturés par l'impact. Par conséquent, on mesure l'accélération de la raquette Ra au début du balancement. En outre, au début du balancement, l'axe longitudinal z de la raquette Ra est tangent à la trajectoire, ce qui signifie que la vitesse de rotation angulaire peut être négligée, comme illustré sur la figure 14.
En effet, sur la figure 14 est représentée l'évolution temporelle de la position de la raquette Ra durant un service, pour différentes positions intermédiaires de la raquette Ra. Sur la figure 14, $\omega_{pod}$ représente la vitesse angulaire de la raquette mesurée par le ou les gyromètres, θ' représente la vitesse angulaire liée à la trajectoire ou la vitesse de la main du joueur, et R représente le rayon de courbure instantané de la trajectoire.
Au début du balancement du service, la raquette Ra fait une "pause" dans le dos du joueur. Cette pause peut être considérée comme un minimum local de l'accélération, comme illustré sur la figure 15. Ce minimum peut être considéré comme le début du mouvement. Toutefois, pour des joueurs ayant un niveau de jeu élevé, ce minimum peut ne pas exister, ou ne pas correspondre au début du mouvement.
Plusieurs critères sont pris en compte à la place du minimum d'accélération :

- l'énergie à l'impact, traduite par la valeur de l'accélération (somme des composantes de l'accélération selon les axes x,y et z) juste avant $t_0$.
- la pente de la progression de l'énergie sur quelques échantillons de données avant l'impact.

Tout ceci doit prendre en compte le fait qu'au moins une des composantes de l'accélération sature avant l'impact, sur une plage temporelle plus ou moins large selon le niveau du joueur. Cette plage temporelle peut s'étendre sur 5 ou 6 échantillons pour des joueurs débutants (soit pour un échantillonnage toutes les 5 ms, sur 25 ou 30 ms), jusqu'à 30 échantillons pour les plus énergiques (150 ms).

L'énergie à l'impact repose donc essentiellement sur les valeurs des autres composantes de l'accélération. Plus cette énergie est forte, plus on intègre sur une durée importante avant l'impact.

Quant à la pente du profil d'accélération, elle est la plus représentative sur les 50 ms avant l'impact. Plus cette pente est faible, plus l'accélération avant l'impact est importante, et plus la plage d'intégration pour obtenir la vitesse sera prise large. Si le mouvement est très fort, l'accélération selon l'axe x sature très vite et le signal correspondant est constant (horizontal). A cause de cela, les pentes du profil des accélérations calculées à partir des trois axes sont faibles.

Pour résumer, on a le schéma suivant :

MaxAcc représentant le maximum d'accélération, sur l'ensemble des axes, atteint juste avant l'impact, et Acc50 représentant l'accélération à ($t_0$ - 50 ms) Si MaxAcc est inférieur à 35, on intègre sur 10 échantillons avant l'impact.
Si MaxAcc est compris entre 35 et 45, on intègre sur 15 échantillons avant l'impact.
Si MaxAcc est supérieur à 45, on intègre sur 18 échantillons avant l'impact.

Pour chacun des trois tests précédents, on ajoute le test suivant :

Si (MaxAcc - Acc50) est supérieur à 10.5, on intègre sur quatre échantillons de plus (ce qui donne respectivement 14, 19, 22 selon la valeur de MaxAcc).

La vitesse estimée peut être corrigée en tenant compte de la présence d'un effet. Dans le cas du service, l'effet peut être un lift ou un slice, par exemple.

La prise en compte des effets se fait de la façon suivante : on mesure au moment de l'impact la valeur de $\alpha = \dfrac{G_Y}{|G_X| + |G_Y|}$ : plus la rotation autour de l'axe y est forte, plus l'effet est marqué.

Ce paramètre $\alpha$ est compris en 0 et 1. La vitesse corrigée v' est calculée par la relation v'=v$\times$(0,2-$\alpha^4$); en effet, plus l'effet est fort, plus la vitesse de la balle ou projectile Pj est ralentie par rapport à la vitesse de la raquette. Une fonction décroissant en a permet de réévaluer la vitesse.

En outre, la vitesse peut, indépendamment ou en combinaison, être corrigée en tenant compte du centrage de la balle, en utilisant le critère de centrage C précédemment défini.

La vitesse corrigée v" en tenant compte du centrage suit la relation suivante :

$$\text{v"=v(1+signe(E(C-0.8))}\times\text{(1.2843-0.1857}\times\text{C))}$$

dans laquelle E représentant la fonction partie entière, on a :

$$\text{sign}\bigl(\text{E(C} - 0.8)\bigr) = 0 \text{ si C} < 1.8$$
$$= 1 \text{ sinon}$$

Si cette correction est appliquée en combinaison de la correction tenant compte d'un effet, i.e. après avoir tenu compte des effets grâce au paramètre $\alpha$ décrit plus tôt, on tient également compte du centrage : en effet, un service lors duquel la balle est décentrée sera également surestimé. La vitesse corrigée v" en tenant compte du centrage suit la relation suivante :

$$\text{v"=v'(1+signe(E(C-0.8))}\times\text{(1.2843-0.1857}\times\text{C))}$$
$$= \text{v}\times\text{(0,2-}\alpha^4\text{)}\times \text{(1+signe(E(C-0.8))}\times\text{(1.2843-0.1857}\times\text{C))}$$

E étant la fonction partie entière On a :

$$\operatorname{sign}\bigl(\mathrm{E}(\mathrm{C} - 0.8)\bigr) = 0 \text{ si C} < 1.8$$
$$= 1 \text{ sinon}$$

Les valeurs numériques, telle 1.8, prises en compte ont été obtenues par tests.

Il n'y aura donc pas de changement dans la vitesse si le critère de centrage est sous le seuil de 1.8 (on choisit 1.8 d'après les derniers résultats de centrage).

De manière générale, les seuils nécessaires au fonctionnement de la méthode peuvent être avantageusement déterminés sur une base de test représentative des scénarios d'utilisation.

Comme illustré sur la figure 16, on calcule la vitesse du projectile en km/h, en utilisant un apprentissage au moyen d'une comparaison avec des mesures radar ou de dispositif optiques (ici un dispositif Vicon(TM)). Le nuage de points obtenu, par tests par différents joueurs, dont est représenté sur la figure 16. Aussi, dans ce cas, on identifie une relation linéaire entre la vitesse estimée par l'algorithme ou une grandeur représentative de la vitesse estimée par l'algorithme, et la vitesse mesurée par un radar, ce qui permet d'adapter et corriger la vitesse calculée. Cette méthode peut être aisément généralisée à d'autres relations, en utilisant des polynômes d'ordre 2, 3 ou une autre fonction modèle paramétrée, ... afin de reproduire des fonctions plus complexes qu'une relation linéaire. Des tables de correspondances peuvent également être utilisées, ou tout autre méthode d'approximation de fonction (par exemple Réseaux de Neurones).

La localisation du joueur sur l'espace de jeu peut être ajoutée à partir de données fournies par un récepteur de système de localisation, par exemple un système de localisation par satellites, lié en déplacement au joueur ou à la raquette, ou un système comprenant caméra vidéo.

Lorsque la vitesse de la raquette dépasse une vitesse de rotation limite du gyromètre, on peut effectuer une extrapolation, ou prolongation hypothétique d'une loi, d'une fonction ou d'une grandeur au-delà des limites temporelles où elles sont objectivement constatées, des signaux fournis par le gyromètre sur cette période de saturation. En effet, un capteur saturé est moins précis, aussi utiliser une extrapolation, ou prolongation hypothétique d'une loi, d'une fonction ou d'une grandeur au-delà des limites temporelles où elles sont objectivement constatées permet d'améliorer la précision.

La présent procédé permet de fournir en temps réel ou en différé, des statistiques qualitatives et/ou quantitatives relatives à la manière de jouer du joueur, par l'intermédiaire d'un écran de terminal, par exemple une tablette tactile, des statistiques qualitatives et/ou quantitatives relatives à la manière de jouer du joueur.

Les données essentielles sont calculées dans un calculateur embarqué sur la raquette, afin qu'en cas de problème de transmission des données de la raquette vers le terminal mobile muni de moyens d'affichage, celles-ci ne soient pas corrompues.

## Revendications

**1.** Procédé d'analyse du jeu d'un utilisateur d'une raquette (Ra), dans lequel :

- on détecte un impact sur la raquette (Ra) à partir de mesures représentatives d'un choc subi par la raquette (Ra) fournies à partir d'un ensemble capteur comprenant au moins un capteur sensible aux chocs lié fixement en mouvement à la raquette (Ra) ;
- on associe un instant d'impact à un impact détecté, à partir des mesures transmises par l'ensemble capteur ; et
- on élimine des impacts non liés à des coups d'un ensemble de coups prédéterminés à partir de mesures de vitesses de rotations angulaires, fournies par un gyromètre (G) de l'ensemble capteur à au moins un axe de mesure et lié fixement en mouvement à la raquette (Ra), prises durant un intervalle de temps autour dudit instant d'impact.

**2.** Procédé selon la revendication 1, dans lequel, ledit ensemble capteur comprenant au moins un capteur de vibrations (P), on détecte un impact sur la raquette (Ra) à partir de mesures de vibrations transmises par le capteur de vibration (P), par comparaison d'un paramètre représentatif des vibrations avec un premier seuil (S1).

**3.** Procédé selon la revendication 1 ou 2, dans lequel, ledit ensemble capteur comprenant un accéléromètre (A) à au moins un axe de mesure à au moins un axe de mesure, on détecte un impact sur la raquette (Ra) lorsqu'un paramètre dépendant des variations temporelles des accélérations linéaires axiales et/ou des variations temporelles des vitesses de rotation angulaires est supérieur à un deuxième seuil (S2).

**4.** Procédé selon l'une des revendications 1 à 3, dans lequel on élimine des impacts non liés à des coups d'un ensemble de coups prédéterminés, à partir d'une comparaison entre une valeur représentative de la vitesse de rotation angulaire selon un axe durant un intervalle de temps ($\Delta t$) autour de l'instant d'impact et un troisième seuil (S3).

5. Procédé selon l'une des revendications 1 à 4, dans lequel, ledit gyromètre (G) comprenant au moins deux axes de mesure, on élimine des impacts non liés à des coups d'un ensemble de coups prédéterminés, à partir d'une comparaison entre une première valeur représentative de la vitesse de rotation angulaire selon un premier axe durant un intervalle de temps autour de l'instant d'impact et une deuxième valeur représentative de la vitesse de rotation angulaire selon un deuxième axe durant ledit intervalle de temps.

6. Procédé selon l'une des revendications précédentes, dans lequel, ledit gyromètre (G) comprenant trois axes de mesure et ledit ensemble capteur comprenant au moins un accéléromètre à trois axes de mesure, on détermine l'attitude de la raquette (Ra) par rapport à un repère terrestre à partir des mesures des accélérations linéaires axiales et des mesures des vitesses de rotation angulaire selon lesdits axes de mesure.

7. Procédé selon la revendication 6, dans lequel on classifie un coup parmi un ensemble de coups, par association d'un coup à un mouvement de la raquette pour lequel, autour de l'instant d'impact, la vitesse de rotation de la raquette (Ra) est essentiellement selon un axe déterminé et l'attitude de la raquette est essentiellement selon une attitude déterminée.

8. Procédé selon la revendication 7, dans lequel on classifie un coup parmi un ensemble de coups, en outre à partir d'une information représentative du caractère gaucher ou droitier du joueur, et du signe de la vitesse de rotation angulaire selon l'axe déterminé.

9. Procédé selon la revendication 8, dans lequel l'information représentative du caractère gaucher ou droitier du joueur est fournie par le joueur ou apprise automatiquement durant le jeu.

10. Procédé selon l'une des revendications 7 à 9, dans lequel on détecte un coup parmi un ensemble de coups, par association d'un coup à une forme déterminée d'une projection d'un vecteur représentatif de l'attitude de la raquette (Ra) sur un axe déterminé sur un intervalle de temps autour de l'instant d'impact.

11. Procédé selon l'une des revendications précédentes, dans lequel, ledit gyromètre à comprenant au moins deux axes de mesure et l'impact étant dû à un projectile (Pj), on détermine l'intensité d'un effet donné au projectile (Pj), au moment de l'impact à partir d'une comparaison de la vitesse de rotation angulaire selon un premier axe durant un intervalle de temps autour de l'instant d'impact et de la vitesse de rotation angulaire selon un deuxième axe durant ledit intervalle de temps.

12. Procédé selon la revendication 11 en dépendance de l'une des revendications 6 à 10, dans lequel, lesdits axes comprennent un premier axe transversal (x) dans la direction de la largeur de la raquette (Ra) et un deuxième axe transversal (y) dans la direction de l'épaisseur de la raquette, et on différencie un effet coupé d'un effet lifté à partir du signe de la vitesse de rotation angulaire ($G_y$) selon le deuxième axe transversal (y) et d'une orientation de la raquette durant ledit intervalle de temps.

13. Procédé selon l'une des revendications précédentes, dans lequel, les axes comprenant un axe longitudinal (z) orienté du manche vers la tête de la raquette (Ra), ledit gyromètre à au moins un axe de mesure étant apte à délivrer une vitesse de rotation (Gz) selon l'axe longitudinal (z), et l'impact étant dû à un projectile (Pj), on détermine une bande longitudinale d'impact (haute, médiane, basse) sur le tamis de la raquette, dans laquelle a eu lieu l'impact du projectile (Pj), à partir d'une variation de la vitesse de rotation angulaire ($G_z$) selon l'axe longitudinal (z) sur un intervalle de temps suivant immédiatement l'impact.

14. Procédé selon la revendication 13, dans lequel, ledit gyromètre à au moins un axe de mesure étant apte à délivrer une vitesse de rotation (Gx) selon un premier axe transversal (x) dans la direction de la largeur de la raquette (Ra), ladite détermination de bande longitudinale d'impact est corrigée par information représentative de la vitesse de la raquette (Ra) autour de l'instant d'impact.

15. Procédé selon l'une des revendications précédentes, dans lequel, l'ensemble capteur comprenant au moins un capteur de vibrations (P) et l'impact étant dû à un projectile (Pj), on détermine une bande radiale d'impact (B1, B2, B3), dans laquelle a eu lieu l'impact du projectile (Pj), à partir de l'énergie (E) et de la phase ($\Phi$) du signal transmis par le capteur de vibration (P) dû à l'impact.

**16.** Procédé selon l'une des revendications précédentes, dans lequel, l'ensemble capteur comprenant un accéléromètre (A) à trois axes de mesure et/ou un gyromètre (G) à trois axes de mesure, et l'impact étant du à un projectile (Pj), lors d'un démarrage d'une phase de jeu, on calcule respectivement une vitesse d'envoi du projectile (Pj) à partir des mesures des accélérations axiales et/ou des mesures des vitesses de rotation angulaire pendant la phase d'accélération de la raquette (Ra) précédant l'impact.

**17.** Procédé selon la revendication 16, dans lequel on corrige la vitesse d'envoi du projectile (Pj) calculée à partir de la connaissance d'une zone d'impact du projectile et/ou de l'intensité de l'effet donné au projectile.

**18.** Procédé selon l'une des revendications précédentes, dans lequel, on détermine, en outre la localisation du joueur sur l'espace de jeu à partir de données fournies par un système de localisation du joueur ou de la raquette (Ra).

**19.** Procédé selon l'une des revendications précédentes, dans lequel, l'ensemble capteur comprenant au moins un accéléromètre (A), et lorsque durant un intervalle de temps autour de l'instant d'impact les signaux du ou desdits capteurs sont saturés, on effectue une extrapolation des signaux fournis par le ou les capteurs sur ledit intervalle de temps de saturation.

**20.** Système d'analyse du jeu d'un utilisateur d'une raquette (Ra), comprenant :

- des moyens de détection d'un impact sur la raquette (Ra) à partir de mesures représentatives d'un choc subi par la raquette (Ra) fournies à partir d'un ensemble capteur comprenant au moins un capteur sensible aux chocs lié fixement en mouvement à la raquette (Ra) ;
- des moyens d'association d'un instant d'impact à un impact détecté, à partir des mesures transmises par l'ensemble capteur ;
- un gyromètre (G), de l'ensemble capteur, à au moins un axe de mesure et lié fixement en mouvement à la raquette (Ra) ; et
- des moyens d'élimination des impacts non liés à des coups d'un ensemble de coups prédéterminés à partir de mesures de vitesses de rotations angulaires, fournies par ledit gyromètre (G), prises durant un intervalle de temps autour dudit instant d'impact.

**21.** Système selon la revendication 20, dans lequel ledit ensemble capteur est monté fixement sur la raquette de sorte que deux axes de mesures dudit ensemble capteur ($x_c$, $z_c$) forment un angle de 45° avec un premier axe transversal (x) dans la direction de la largeur de la raquette (Ra) et un axe longitudinal (z) dans la direction de la longueur de la raquette (Ra).

**22.** Système selon la revendication 20 ou 21, dans lequel ledit ensemble capteur est monté fixement dans un boîtier externe muni de moyens de fixation adaptés pour être à volonté montés/démontés sur la raquette (Ra), ou est monté fixement sur la raquette (Ra).

**23.** Système selon la revendication 20 ou 21, dans lequel, l'ensemble capteur est monté fixement sur la raquette (Ra) et comprend un accéléromètre (A) et le gyromètre (G) disposés dans le manche de la raquette (Ra) au niveau du bas de la poignée, et un capteur de vibrations (P) disposé sur le manche de la raquette (Ra) entre la poignée et le bas de la tête de la raquette.

**Patentansprüche**

**1.** Verfahren zum Analysieren des Spiels eines Benutzers eines Schlägers (Ra), bei dem:

- ein Aufprall auf dem Schläger (Ra) auf der Basis von Messwerten erkannt wird, die einen von dem Schläger (Ra) erfahrenen Schock repräsentieren, geliefert von einem Satz von Sensoren, die wenigstens einen Sensor umfassen, der für die Schocks empfindlich und bewegungsfest mit dem Schläger (Ra) verbunden ist;
- ein Aufprallmoment mit einem erkannten Aufprall auf der Basis von von dem Sensorsatz übertragenen Messwerten assoziiert wird; und
- Aufpraller, die nicht mit Schlägen eines Satzes von vorbestimmten Schlägen verbunden sind, auf der Basis von Messungen der Winkeldrehgeschwindigkeiten, geliefert von einem Gyrometer (G) des Sensorsatzes auf auf wenigstens einer Messachse, das bewegungsfest mit dem Schläger (Ra) verbunden ist, durchgeführt während eines Zeitintervalls um den Aufprallmoment.

2. Verfahren nach Anspruch 1, bei dem, wenn der Sensorsatz wenigstens einen Vibrationssensor (P) umfasst, ein Aufprall auf dem Schläger (Ra) auf der Basis von Vibrationsmesswerten, die von dem Vibrationssensor (P) übertragen werden, durch Vergleichen eines für Vibrationen repräsentativen Parameters mit einer ersten Schwelle (S1) erkannt wird.

3. Verfahren nach Anspruch 1 oder 2, bei dem, wenn der Sensorsatz einen Beschleunigungsmesser (A) mit wenigstens einer Messachse umfasst, ein Aufprall auf dem Schläger (Ra) erkannt wird, wenn ein von zeitlichen Variationen der linearen axialen Beschleunigungen und/oder von zeitlichen Variationen der Winkeldrehgeschwindigkeiten abhängiger Parameter größer ist als eine zweite Schwelle (S2).

4. Verfahren nach einem der Ansprüche 1 bis 3, bei dem nicht mit Schlägen eines Satzes von vorbestimmten Schlägen verbundene Aufpraller auf der Basis eines Vergleichs zwischen einem Wert, der die Winkeldrehgeschwindigkeit in einer Achse während eines Zeitintervalls (Δt) um den Aufprallmoment repräsentiert, und einer dritten Schwelle (S3) eliminiert werden.

5. Verfahren nach einem der Ansprüche 1 bis 4, bei dem, wenn das Gyrometer (G) wenigstens zwei Messachsen aufweist, Aufpraller, die nicht mit Schlägen eines Satzes von vorbestimmten Schlägen verbunden sind, auf der Basis eines Vergleichs zwischen einem ersten Wert, der die Winkeldrehgeschwindigkeit auf einer ersten Achse während eines Zeitintervalls um den Aufprallmoment repräsentiert, und einem zweiten Wert eliminiert werden, der die Winkeldrehgeschwindigkeit auf einer zweiten Achse während des Zeitintervalls repräsentiert.

6. Verfahren nach einem der vorherigen Ansprüche, bei dem, wenn das Gyrometer (G) drei Messachsen umfasst und der Sensorsatz wenigstens einen Beschleunigungsmesser mit drei Messachsen umfasst, die Lage des Schlägers (Ra) mit Bezug auf einen terrestrischen Bezugspunkt auf der Basis von Messungen der linearen axialen Beschleunigungen und von Messungen der Winkeldrehgeschwindigkeiten auf den Messachsen bestimmt wird.

7. Verfahren nach Anspruch 6, bei dem ein Schlag aus einem Satz von Schlägen durch Assoziation eines Schlag mit einer Bewegung des Schlägers klassifiziert wird, für den, um den Aufprallmoment, die Drehgeschwindigkeit des Schlägers (Ra) im Wesentlichen auf einer bestimmten Achse ist und die Lage des Schlägers im Wesentlichen gemäß einer bestimmten Lage ist.

8. Verfahren nach Anspruch 7, bei dem ein Schlag aus einem Satz von Schlägen, ferner auf der Basis einer Information, die die Links- oder Rechtshändigkeit des Spielers repräsentiert, und des Vorzeichens der Winkeldrehgeschwindigkeit auf der bestimmten Achse klassifiziert wird.

9. Verfahren nach Anspruch 8, bei dem die Information, die die Links- oder Rechtshändigkeit des Spielers repräsentiert, von dem Spieler gegeben oder automatisch während des Spiels gelernt wird.

10. Verfahren nach einem der Ansprüche 7 bis 9, bei dem ein Schlag aus einem Satz von Schlägen durch Assoziation eines Schlags mit einer bestimmten Form einer Projektion eines für die Lage des Schlägers (Ra) repräsentativen Vektors auf einer bestimmten Achse über ein Zeitintervall um den Aufprallmoment erkannt wird.

11. Verfahren nach einem der vorherigen Ansprüche, bei dem, wenn das Gyrometer wenigstens zwei Messachsen hat und der Aufprall auf ein Geschoss (Pj) zurückzuführen ist, die Intensität eines gegebenen Effekts auf das Geschoss (Pj) im Moment des Aufpralls auf der Basis eines Vergleichs der Winkeldrehgeschwindigkeit auf einer ersten Achse während eines Zeitintervalls um den Aufprallmoment und der Winkeldrehgeschwindigkeit auf einer zweiten Achse während des Zeitintervalls bestimmt wird.

12. Verfahren nach Anspruch 11 in Abhängigkeit von einem der Ansprüche 6 bis 10, bei dem die Achsen eine erste transversale Achse (x) in Richtung der Breite des Schlägers (Ra) und eine zweite transversale Achse (y) in Richtung der Dicke des Schlägers umfassen, und ein Schneideffekt von einem Topspin-Effekt auf der Basis des Vorzeichens der Winkeldrehgeschwindigkeit ($G_y$) auf der zweiten transversalen Achse (y) und einer Orientierung des Schlägers während des Zeitintervalls unterschieden wird.

13. Verfahren nach einem der vorherigen Ansprüche, bei dem, wenn die Achsen eine vom Griff zum Kopf des Schlägers (Ra) orientierte longitudinale Achse (z) aufweisen, das Gyrometer mit wenigstens einer Messachse eine Drehgeschwindigkeit ($G_z$) auf der longitudinalen Achse (z) liefern kann, und wobei der Aufprall auf ein Geschoss (Pj) zurückzuführen ist, ein longitudinales Aufprallband (oben, Mitte, unten) auf der Fläche des Schlägers, in dem der

**EP 2 846 883 B1**

Aufprall des Geschosses (Pj) stattgefunden hat, auf der Basis einer Variation der Winkeldrehgeschwindigkeit (G$_z$) in der longitudinalen Achse (z) in einem Zeitintervall unmittelbar nach dem Aufprall bestimmt wird.

14. Verfahren nach Anspruch 13, bei dem das Gyrometer mit wenigstens einer Messachse, die eine Drehgeschwindigkeit (Gx) auf einer ersten transversalen Achse (x) in Richtung der Breite des Schlägers (Ra) liefern kann, wobei die Bestimmung des longitudinalen Aufprallbandes anhand von Informationen korrigiert wird, die die Geschwindigkeit des Schlägers (Ra) um den Aufprallmoment repräsentieren.

15. Verfahren nach einem der vorherigen Ansprüche, bei dem, wenn der Sensorsatz wenigstens einen Vibrationssensor (P) umfasst und der Aufprall auf ein Geschoss (Pj) zurückzuführen ist, ein radiales Aufprallband (B1, B2, B3), in dem der Aufprall des Geschosses (Pj) stattgefunden hat, auf der Basis der Energie (E) und der Phase (Φ) des vom Vibrationssensor (P) aufgrund des Aufpralls gesendeten Signals bestimmt wird.

16. Verfahren nach einem der vorherigen Ansprüche, bei dem, wenn der Sensorsatz einen Beschleunigungsmesser (A) mit drei Messachsen und/oder ein Gyrometer (G) mit drei Messachsen umfasst und der Aufprall auf ein Geschoss (Pj) zurückzuführen ist, zu Beginn einer Spielphase jeweils eine Abschussgeschwindigkeit des Geschosses (Pj) auf der Basis von Messwerten der axialen Beschleunigungen und/oder von Messwerten der Winkeldrehgeschwindigkeiten während der Beschleunigungsphase des Schlägers (Ra) vor dem Aufprall berechnet wird.

17. Verfahren nach Anspruch 16, bei dem die Abschussgeschwindigkeit des Geschosses (Pj), berechnet auf der Basis der Kenntnis einer Aufprallzone des Geschosses und/oder der Intensität des gegebenen Effekts auf das Geschoss, korrigiert wird.

18. Verfahren nach einem der vorherigen Ansprüche, bei dem ferner der Ort des Spielers im Spielraum auf der Basis von Daten bestimmt wird, die von einem System zum Orten des Spielers oder des Schlägers (Ra) geliefert werden.

19. Verfahren nach einem der vorherigen Ansprüche, bei dem, wenn der Sensorsatz wenigstens einen Beschleunigungsmesser (A) umfasst und wenn während eines Zeitintervalls um den Aufprallmoment die Signale des Sensors oder der Sensoren gesättigt sind, eine Extrapolation der von dem Sensor oder den Sensoren gelieferten Signale über das Sättigungszeitintervall erfolgt.

20. System zum Analysieren des Spiels eines Benutzers eines Schlägers (Ra), das Folgendes umfasst:

- Mittel zum Erkennen eines Aufpralls auf dem Schläger (Ra) auf der Basis von Messwerten, die einen von dem Schläger (Ra) erfahrenen Stoß repräsentieren, geliefert auf der Basis eines Sensorsatzes, der wenigstens einen Sensor umfasst, der für die Stöße empfindlich und bewegungsfest mit dem Schläger (Ra) verbunden ist;
- Mittel zum Assoziieren eines Aufprallmoments mit einem erkannten Aufprall auf der Basis von von dem Sensorsatz übertragenen Messwerten;
- ein Gyrometer (G), aus dem Sensorsatz, mit wenigstens einer Messachse, das bewegungsfest mit dem Schläger (Ra) verbunden ist; und
- Mittel zum Eliminieren der Aufpraller, die nicht mit Schlägen eines Satzes von vorbestimmten Schlägen verbunden sind, auf der Basis von Messungen von Winkeldrehgeschwindigkeiten, geliefert vom Gyrometer (G), die während eines Zeitintervalls um den Aufprallmoment durchgeführt wurden.

21. System nach Anspruch 20, bei dem der Sensorsatz fest an dem Schläger montiert ist, so dass zwei Messachsen des Sensorsatzes (x$_c$, z$_c$) einen Winkel von 45° mit einer ersten transversalen Achse (x) in Richtung der Breite des Schlägers (Ra) und eine longitudinale Achse (z) in Richtung der Breite des Schlägers (Ra) bilden.

22. System nach Anspruch 20 oder 21, bei dem der Sensorsatz fest in einem externen Gehäuse, ausgestattet mit Befestigungsmitteln zum beliebigen Montieren an/Demontieren von dem Schläger (Ra), oder fest an dem Schläger (Ra) montiert ist.

23. System nach Anspruch 20 oder 21, bei dem der Sensorsatz fest an dem Schläger (Ra) montiert ist und einen Beschleunigungsmesser (A) und das Gyrometer (G) umfasst, angeordnet im Griff des Schlägers (Ra) in der Höhe des Griffendes, und einen Vibrationssensor (P), der am Griff des Schlägers (Ra) zwischen dem Griffende und dem unteren Teil des Schlägerkopfs angeordnet ist.

**Claims**

1. A method for analysing the game of a user of a racket (Ra) wherein:

> - an impact on the racket (Ra) is detected on the basis of measurements representing a shock experienced by the racket (Ra) provided by a sensor assembly comprising at least one sensor sensitive to shocks attached to the racket (Ra) in a fixed manner in terms of movement;
> - a moment of impact is associated with a detected impact on the basis of the measurements transmitted by the sensor assembly; and
> - impacts that are not related to strokes from a set of predetermined strokes are eliminated on the basis of angular rotation speed measurements provided by a gyrometer (G) of the sensor assembly that has at least one measurement axis and is attached to the racket (Ra) in a fixed manner in terms of movement, taken during an interval of time around said moment of impact.

2. The method according to Claim 1, wherein, said sensor assembly comprising at least one vibration sensor (P), an impact on the racket (Ra) is detected on the basis of vibration measurements transmitted by the vibration sensor (P) by comparing a parameter representing the vibrations with a first threshold (S1).

3. The method according to Claim 1 or 2 wherein, said sensor assembly comprising an accelerometer (A) with at least one measurement axis, an impact on the racket (Ra) is detected when a parameter depending on the variations over time of the axial linear accelerations and/or variations over time of the angular rotation velocities is above a second threshold (S2).

4. The method according to any of Claims 1 to 3, wherein impacts that are not related to strokes from a set of predetermined strokes are eliminated on the basis of a comparison between a value representing the angular rotation speed along an axis during an interval of time ($\Delta t$) around the moment of impact and a third threshold (S3).

5. The method according to any of Claims 1 to 4, wherein, said gyrometer (G) comprising at least two measurement axes, impacts that are not related to strokes from a set of predetermined strokes are eliminated on the basis of a comparison between a first value representing the angular rotation speed along a first axis during an interval of time around the moment of impact and a second value representing the angular rotation velocity along a second axis during said interval of time.

6. The method according to any of the preceding claims, wherein, said gyrometer (G) comprising three measurement axes and said sensor assembly comprising at least one accelerometer with three measurement axes, the attitude of the racket (Ra) is determined with respect to a terrestrial frame of reference on the basis of measurements of the axial linear accelerations and measurements of the angular rotation speeds along said measurement axes.

7. The method according to Claim 6, wherein a stroke is classified among a set of strokes by association of a stroke with a movement of the racket for which, around the moment of impact, the rotation speed of the racket (Ra) is essentially along a determined axis and the attitude of the racket is essentially at a determined attitude.

8. The method according to Claim 7, wherein a stroke is classified among a set of strokes, furthermore on the basis of a piece of information representing left- or right-handedness of the player, and of the sign of the angular rotation speed along the determined axis.

9. The method according to Claim 8, wherein the piece of information representing the left- or right-handedness of the player is provided by the player or learnt automatically during the game.

10. The method according to any of Claims 7 to 9, wherein a stroke is detected among a set of strokes by associating a stroke with a determined form of a projection of a vector representing the attitude of the racket (Ra) along a determined axis over an interval of time around the moment of impact.

11. The method according to any of the preceding claims, wherein, said gyrometer comprising at least two measurement axes and the impact being due to a projectile (Pj), the intensity of an effect given to the projectile (Pj) is determined, at the moment of impact, on the basis of a comparison of the angular rotation speed along a first axis during an interval of time around the moment of impact and of the angular rotation speed along a second axis during said interval of time.

12. The method according to Claim 11 depending on any of Claims 6 to 10, wherein said axes comprise a first transverse axis (x) in the direction of the width of the racket (Ra) and a second transverse axis (y) in the direction of thickness of the racket, and a slice effect is differentiated from a topspin effect on the basis of the sign of the angular rotation speed ($G_y$) along the second transverse axis (y) and an orientation of the racket during said interval of time.

13. The method according to any of the preceding claims, wherein, the axes comprising a longitudinal axis (z) oriented from the shaft to the head of the racket (Ra), said gyrometer with at least one measurement axis being able to deliver a rotation speed (Gz) along the longitudinal axis (z), and the impact being due to a projectile (Pj), a longitudinal impact strip (upper, central, lower) on the head of the racket, wherein the impact of the projectile (Pj) took place, is determined on the basis of a variation in the angular rotation speed (Gz) along the longitudinal axis (z) over an interval of time immediately following the impact.

14. The method according to Claim 13, wherein, said gyrometer with at least one measurement axis being able to provide a rotation speed (Gx) along a first transverse axis (x) in the direction of the width of the racket (Ra), said determination of the longitudinal impact strip is corrected by a piece of information representing the speed of the racket (Ra) around the moment of impact.

15. The method according to any of the preceding claims, wherein, the sensor assembly comprising at least one vibration sensor (P) and the impact being due to a projectile (Pj), a radial impact strip (B1, B2, B3) in which the impact of the projectile (Pj) took place is determined on the basis of the energy (E) of the phase ($\Phi$) of the signal transmitted by the vibration sensor (P) due to the impact.

16. The method according to any of the preceding claims, wherein, the sensor assembly comprising an accelerometer (A) with three measurement axes and/or a gyrometer (G) with three measurement axes, and the impact being due to a projectile (Pj), during a start of a phase of the game, a projectile (Pj) launch speed is calculated respectively on the basis of the measurements of axial accelerations and/or measurements of the angular rotation speeds during the acceleration phase of the racket (Ra) preceding the impact.

17. The method according to Claim 16, wherein the projectile (Pj) launch speed calculated on the basis of knowledge of an impact zone of the projectile and/or the intensity of the effect given to the projectile is corrected.

18. The method according to any of the preceding claims, wherein the location of the player on the game space is determined, furthermore, on the basis of data provided by a system for locating the player or the racket (Ra).

19. The method according to any of the preceding claims, wherein, the sensor assembly comprising at least one accelerometer (A), and when during an interval of time around the moment of impact the signals of said sensor or sensors are saturated, an extrapolation of the signals provided by the sensor or sensors is carried out over said saturation interval of time.

20. A system for analysing the game of a user of a racket (Ra), comprising:

   - means for detecting an impact on the racket (Ra) on the basis of measurements representing a shock experienced by the racket (Ra) provided on the basis of a sensor assembly comprising at least one sensor sensitive to shocks attached to the racket (Ra) in a fixed manner in terms of movement;
   - means for associating a moment of impact with a detected impact on the basis of measurements transmitted by the sensor assembly;
   - a gyrometer (G) of the sensor assembly with at least one measurement axis and attached to the racket (Ra) in a fixed manner in terms of movement; and
   - means for eliminating impacts not related to strokes from a set of predetermined strokes on the basis of angular rotation speed measurements provided by said gyrometer (G), taken during an interval of time around said moment of impact.

21. The system according to Claim 20, wherein said sensor assembly is mounted on the racket in a fixed manner such that two measurement axes of said sensor assembly ($x_c$, $z_c$) form an angle of 45° with a first transverse axis (x) in the direction of the width of the racket (Ra) and a longitudinal axis (z) in the direction of length of the racket (Ra).

22. The system according to Claim 20 or 21, wherein said sensor assembly is mounted in a fixed manner in an outer casing equipped with fixing means adapted for being mounted/dismounted as desired on the racket (Ra), or is mounted on the racket (Ra) in a fixed manner.

23. The system according to Claim 20 or 21, wherein the sensor assembly is mounted in a fixed manner on the racket (Ra) and comprises an accelerometer (A) and the gyrometer (G) arranged in the shaft of the racket (Ra) at the bottom of the grip, and a vibration sensor (P) arranged on the shaft of the racket (Ra) between the grip and the bottom of the head of the racket.

DI

Mesures
représentatives
d'un choc → Détection
impact → impact
$t_0$ →

## FIG.1

Ra

Pj

$z_c$ $z$ $x_c$
$x$
$y$

A,G

## FIG.2a

Ra

Pj

$z$
$x$
$y$

A,G

## FIG.2

Ax, Ay, Az → Détection
impact → impact
Instant
d'impact $t_0$ → Elimination
d'impacts
non souhaités → impact
Instant
d'impact $t_0$ →

Gx, Gy, Gz

## FIG.3

21

FIG.4

FIG.5

FIG.6

FIG.7

FIG.8

| Droitier = 1 | Orientation raquette >0 | Orientation raquette <0 |
|---|---|---|
| Direction mouvement >0 | coup droit | revers |
| Direction mouvement <0 | revers | coup droit |

| Gaucher= -1 | Orientation raquette >0 | Orientation raquette <0 |
|---|---|---|
| Direction mouvement >0 | revers | coup droit |
| Direction mouvement <0 | coup droit | revers |

## FIG.9

## FIG.10

EP 2 846 883 B1

FIG.11

FIG.12

FIG.13

θ' ≠ ω$_{pod}$
(L'angle relatif entre la trajectoire
et la raquette varie)

θ' = ω$_{pod}$
(Tant que la raquette
reste tangente à la trajectoire)

FIG.14

FIG.15

FIG.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011183787 A
- US 5757266 A
- US 20050239583 A
- US 6134965 A
- WO 0235184 A
- WO 2010007160 A

**Littérature non-brevet citée dans la description**

- An extended Kalman filter for quaternion-based orientation estimation using MARG sensors. **DE MARINS, J.L. ; XIAOPING YUN ; BACHMANN, E.R. ; MCGHEE, R.B. ; ZYDA, M.J.** Intelligent Robots and Systems. IEEE/RSJ, 2001